(19) Europäisches Patentamt
European Patent Office
Office européen des brevets

(11) EP 4 368 386 A1

(12) **EUROPEAN PATENT APPLICATION**
published in accordance with Art. 153(4) EPC

(43) Date of publication:
**15.05.2024 Bulletin 2024/20**

(21) Application number: **22837448.4**

(22) Date of filing: **17.06.2022**

(51) International Patent Classification (IPC):
***B32B 15/09*** $^{(2006.01)}$ ***B32B 27/00*** $^{(2006.01)}$
***B32B 27/20*** $^{(2006.01)}$ ***B32B 27/36*** $^{(2006.01)}$
***B65D 65/40*** $^{(2006.01)}$ ***C08J 5/18*** $^{(2006.01)}$
***C08K 3/013*** $^{(2018.01)}$ ***C08L 67/00*** $^{(2006.01)}$

(52) Cooperative Patent Classification (CPC):
**B32B 15/09; B32B 27/00; B32B 27/20; B32B 27/36; B65D 65/40; C08J 5/18; C08K 3/013; C08L 67/00**

(86) International application number:
**PCT/JP2022/024359**

(87) International publication number:
**WO 2023/282030 (12.01.2023 Gazette 2023/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **05.07.2021 JP 2021111601**

(71) Applicant: **TOYOBO CO., LTD.**
**Osaka-shi, Osaka 530-0001 (JP)**

(72) Inventors:
- **HADA,Masanori**
  **Inuyama-shi, Aichi 484-8508 (JP)**
- **KUBO,Koji**
  **Inuyama-shi, Aichi 484-8508 (JP)**

(74) Representative: **Vossius & Partner Patentanwälte Rechtsanwälte mbB**
**Siebertstrasse 3**
**81675 München (DE)**

# (54) FILM FOR LAMINATING METAL PLATE

(57) A film for laminating a metal plate, the film comprising a polyester resin layer (A), wherein the polyester resin layer (A) contains a pigment, wherein the pigment includes at least one of an inorganic pigment or an organic pigment, and a pearl pigment; and the film for laminating a metal plate has an a* value of -5 to 20 and a b* value of 0 to 50.

EP 4 368 386 A1

## Description

TECHNICAL FIELD

The present invention relates to a film for laminating a metal plate.

BACKGROUND ART

A method is known in which a molded article such as a can is fabricated by laminating a polyester film on a metal plate such as tinplate, tin-free steel, or aluminum and then molding the metal plate laminated with a polyester film (hereinafter sometimes referred to as "laminated metal plate") in order to prevent corrosion of metal plate (see Patent Documents 1 and 2, for example). This method has the advantage of being able to simplify that the process, that is, to diminish the number of man-hours compared to the case in which a metal plate is painted for corrosion prevention.

In order to give a gold tint to such molded articles (for example, cans), a colored polyester film is sometimes laminated on a metal plate (see Patent Document 1, for example). A gold tint is a yellowish tint that imparts feel of luster. In other words, a gold tint is a lustrous yellowish tint.

PRIOR ART DOCUMENTS

PATENT DOCUMENTS

Patent Document 1: JP-A-2021-31634
Patent Document 2: JP-A-2007-45895

SUMMARY OF THE INVENTION

PROBLEMS TO BE SOLVED BY THE INVENTION

Patent Document 1 describes that a polyester film colored with an organic pigment is fabricated, but organic pigments generally exhibit lower heat resistance than inorganic pigments. Therefore, the upper limit of the possible temperature of this polyester film for retorting (for example, heat treatment performed to sterilize food and/or drink in molded articles) is sometimes affected by the organic pigment. In other words, when an organic pigment is used as a coloring agent, the improvement in possible temperature for retorting is sometimes limited. In addition to this, when organic pigments as coloring agents are used together with resins having high melting points, sublimation and fading of organic pigments sometimes occur during the fabrication process of a film for laminating a metal plate, for example, during extrusion molding.

Meanwhile, it is difficult to give a gold tint to a laminated metal plate simply by replacing organic pigments with inorganic pigments. This is because voids (for example, apertures generated around inorganic pigments by biaxial stretching) caused by inorganic pigments increase the haze of polyester film and decrease the total light transmittance and the metallic luster of metal plate cannot be effectively utilized.

Hence, it is not realistic to select an inorganic pigment as a coloring agent in a design concept that relies on the metallic luster of metal plate for gold color development. In other words, this design concept has a narrow choice of coloring agents.

An object of the present invention is to provide a film for laminating a metal plate, which can widen the choice of coloring agents (for example, can use an inorganic pigment) and give a gold tint to a laminated metal plate and a molded article.

MEANS FOR SOLVING THE PROBLEMS

In order to solve this problem, the present invention has the configuration of item 1 below.

Item 1

A film for laminating a metal plate, the film including a polyester resin layer (A), in which

the polyester resin layer (A) contains a pigment, in which the pigment includes at least one of an inorganic pigment

or an organic pigment, and a pearl pigment; and
the film for laminating a metal plate has an a* value of -5 to 20 and a b* value of 0 to 50.

Here, the a* value and b* value are values measured by a reflection method using a color difference meter (300A manufactured by NIPPON DENSHOKU INDUSTRIES Co., Ltd.) after the film for laminating a metal plate is brought into close contact with a black standard plate (specifically, black glass BK-7 standard plate (for backing)) via ion exchanged water.
According to item 1, since the film for laminating a metal plate has an a* value of -5 to 20 and a b* value of 0 to 50 and the polyester resin layer (A) contains a pearl pigment, it is possible to widen the choice of coloring agents as well as to give a gold tint to a metal plate laminated with the film for laminating a metal plate (that is, a laminated metal plate). This will be explained. If the polyester resin layer (A) contains an inorganic pigment but does not contain a pearl pigment, it is difficult to give a gold tint to the laminated metal plate. This is because voids caused by the inorganic pigment increase the haze of the film for laminating a metal plate and decrease the total light transmittance and the metallic luster of the metal plate cannot be effectively utilized. According to item 1,in a case where the polyester resin layer (A) contains an inorganic pigment as well, it is possible to give a gold tint to the laminated metal plate by the luster of the pearl pigment. Thus, since the polyester resin layer (A) contains a pearl pigment, it is possible to use an inorganic pigment. In other words, it is possible to widen the choice of coloring agents. In a case where the polyester resin layer (A) contains an organic pigment as well, it is of course possible to give a gold tint to the laminated metal plate.
Moreover, since the polyester resin layer (A) contains a pearl pigment, it is possible to impart pearly feel to the gold tint of the laminated metal plate. In other words, a pearly luster can be imparted to the gold tint. Furthermore, since the polyester resin layer (A) contains a pearl pigment, the amount of inorganic pigment and/or organic pigment can be diminished as compared to the case of containing white titanium oxide (specifically, white titanium dioxide) instead of the pearl pigment. In other words, it is possible to give a gold tint to the laminated metal plate by containing a smaller amount of inorganic pigment and/or organic pigment than in that case (specifically, the case of containing titanium oxide pigment instead of a pearl pigment).
It is preferable that the present invention further includes the configuration of item 2 and subsequent items below.

Item 2

The film for laminating a metal plate according to item 1, which satisfies the following formula:

$$|Gs_{85} - Gs_{45}|/|Gs_{85} - Gs_{60}| \geq 1.6$$

(where Gsss is 85-degree specular gloss, $Gs_{45}$ is 45-degree specular gloss, and $Gs_{60}$ is 60-degree specular gloss) .
Here, $Gs_{85}$, $Gs_{45}$ and $Gs_{60}$ are values measured using a gloss meter (manufactured by NIPPON DENSHOKU INDUSTRIES Co., Ltd.) after the film for laminating a metal plate is brought into close contact with a black standard plate (specifically, black glass BK-7 standard plate (for backing)) via ion exchanged water.
The left side of the formula in item 2, that is, $|Gs_{85} - Gs_{45}|/|Gs_{85} - Gs_{60}|$ is sometimes referred to as Gar below. Gar is an index of pearly feel, that is, an index of pearly luster. As Gar is larger, the pearly feel of the laminated metal plate obtained by laminating the film for laminating a metal plate on a metal plate tends to be stronger.
According to item 2, since Gar is 1.6 or more, it is possible to further impart pearly feel to the gold tint of the laminated metal plate.

Item 3

The film for laminating a metal plate according to item 1 or 2, in which the pearl pigment has an average length of 5 um to 80 μm.
According to item 3, since the average length of the pearl pigment is 5 μm or more, it is possible to decrease voids generated around the pearl pigment by stretching during extrusion molding. Since the average length of the pearl pigment is 80 μm or less, troubles in fabricating the film for laminating a metal plate can be decreased. For example, in a case where extrusion molding is performed to fabricate the polyester resin layer (A), the stability of extrusion molding can be improved.

Item 4

The film for laminating a metal plate according to any one of items 1 to 3, in which the pearl pigment contains mica and an oxide covering the mica, and the oxide is at least one selected from the group consisting of anatase-type

titanium oxide, rutile-type titanium oxide, iron oxide, silicon oxide, and cobalt iron oxide.

According to item 4, since the pearl pigment contains mica, the pearl pigment has excellent mechanical strength, and as a result, for example, it is possible to suppress breakage of the pearl pigment during the fabrication process of the film for laminating a metal plate. Moreover, since the oxide that covers mica is at least one selected from the group consisting of anatase-type titanium oxide, rutile-type titanium oxide, iron oxide, silicon oxide, and cobalt iron oxide, it is possible to effectively impart pearly feel to the gold tint of the laminated metal plate. In addition to this, these exhibit excellent physical and chemical stability, and as a result, for example, it is possible to enhance time-dependent stability of the gold tint of the laminated metal plate.

Item 5

The film for laminating a metal plate according to any one of items 1 to 4, in which the content of the pearl pigment is 0.02% by mass to 10% by mass in 100% by mass of the polyester resin layer (A).

According to item 5, since the content of the pearl pigment is 0.02% by mass or more, it is possible to effectively give a gold tint to the laminated metal plate as well as to further impart pearly feel to the gold tint of the laminated metal plate. Since the content of the pearl pigment is 10% by mass or less, it is possible to diminish changes in tint due to retorting and changes in haze due to retorting. It is also possible to decrease troubles in fabricating the film for laminating a metal plate. For example, in a case where stretching is performed to fabricate the film for laminating a metal plate, breakage of the film that may occur during stretching can be suppressed or diminished. In other words, the film formability can be improved.

Item 6

The film for laminating a metal plate according to any one of items 1 to 5, in which the pigment of the polyester resin layer (A) includes the inorganic pigment.

According to item 6, since the pigment of the polyester resin layer (A) includes an inorganic pigment and a pearl pigment, it is possible to diminish changes in tint due to retorting and changes in haze due to retorting as compared to the case where only an organic pigment and a pearl pigment are contained. In other words, the resistance to retorting can be improved. Moreover, since the hiding power of the polyester resin layer (A) can be improved as compared to that case (specifically, a case where the pigment of the polyester resin layer (A) includes only an organic pigment and a pearl pigment), the influence of the tint of the metal plate on the tint of the laminated metal plate can be diminished. Therefore, it is possible to improve the degree of freedom in choosing the metal plate.

Item 7

The film for laminating a metal plate according to any one of items 1 to 6, in which the pigment of the polyester resin layer (A) includes the organic pigment, and the organic pigment is at least one selected from the group consisting of an acetoacetanilide-based azo pigment and a quinacridone-based organic pigment.

According to item 7, since the organic pigment is at least one selected from the group consisting of an acetoacetanilide-based azo pigment and a quinacridone-based organic pigment, it is possible to diminish changes in tint due to retorting and changes in haze due to retorting. In other words, the resistance to retorting can be improved.

Item 8

The film for laminating a metal plate according to any one of items 1 to 7, in which

the weight loss rate of the inorganic pigment is less than 1.5% by mass when the inorganic pigment is heated from room temperature to 300°C at a rate of temperature increase of 10°C/min in a nitrogen atmosphere,
the weight loss rate of the organic pigment is less than 1.5% by mass when the organic pigment is heated from room temperature to 300°C at a rate of temperature increase of 10°C/min in a nitrogen atmosphere, and
the weight loss rate of the pearl pigment is less than 1.5% by mass when the pearl pigment is heated from room temperature to 300°C at a rate of temperature increase of 10°C/min in a nitrogen atmosphere.

According to item 8, since the weight loss rate of these pigments is less than 1.5% by mass, the heat resistance of these pigments is excellent, and as a result, it is possible to diminish changes in tint due to retorting and changes in haze due to retorting. In other words, the resistance to retorting can be improved.

Item 9

The film for laminating a metal plate according to any one of items 1 to 8, in which the color difference ΔE* before and after retorting at 130°C for 120 minutes is less than 10.

Here, the color difference ΔE* is a value calculated by the following formula based on L*, a*, and b* measured by a reflection method using a color difference meter (300A manufactured by NIPPON DENSHOKU INDUSTRIES Co., Ltd.) after the film for laminating a metal plate before and after retorting is brought into close contact with a black standard plate (specifically, black glass BK-7 standard plate (for backing)) via ion exchanged water.

$$\Delta E^* = [(\Delta L^*)^2 + (\Delta a^*)^2 + (\Delta b^*)^2]^{1/2}$$

ΔL* = Difference in L* of film for laminating metal plate before and after retorting
Δa* = Difference in a* of film for laminating metal plate before and after retorting
Δb* = Difference in b* of film for laminating metal plate before and after retorting

According to item 9, since the color difference ΔE* before and after retorting is less than 10, that is, changes in tint due to retorting is not excessively large, it is possible to give a gold tint to the laminated metal plate after retorting and its molded article as well.

Item 10

The film for laminating a metal plate according to any one of items 1 to 9, further including a polyester resin layer (B) that is in contact with the polyester resin layer (A), in which
the polyester resin layer (B) substantially does not contain a pigment.

Here, "the polyester resin layer (B) substantially does not contain a pigment" means that the polyester resin layer (B) does not contain a pigment at all, or the polyester resin layer (B) contains a pigment at 0.01% by mass or less in 100% by mass of the polyester resin layer (B) .

According to item 10, since the film for laminating a metal plate includes a polyester resin layer (B) that is in contact with the polyester resin layer (A) and substantially does not contain a pigment, it is possible to prevent the polyester resin layer (A) from coming into contact with the contents (for example, food and/or drink such as tomatoes, pickles, and salmon) of molded articles (for example, cans) by, for example, laminating the film for laminating a metal plate on a metal plate so that the polyester resin layer (A) is in contact with the metal plate and then molding this (that is, a laminated metal plate) (for example, forming into a can) so that the film for laminating a metal plate becomes the inner surface. As a result, the pigment contained in the polyester resin layer (A) can be prevented from migrating into the contents. In addition to this, since the polyester resin layer (B) substantially does not contain a pigment, it is possible to further prevent the pigment from being mixed into the contents.

Item 11

The film for laminating a metal plate according to item 10, in which

the polyester resin layer (A) has a thickness of 5 um to 50 um, and
the polyester resin layer (B) has a thickness of 0.5 μm to 15 μm.

According to item 11, since the thickness of the polyester resin layer (A) is 5 μm or more, it is possible to give a gold tint to the laminated metal plate. Since the thickness of the polyester resin layer (A) is 50 um or less, it is possible to avoid excessive quality of the film for laminating a metal plate and to reduce the fabrication cost of the film for laminating a metal plate. Since the thickness of the polyester resin layer (B) is 0.5 μm or more, it is possible to further prevent the pigment contained in the polyester resin layer (A) from migrating to the contents of molded articles (for example, cans) by, for example, laminating the film for laminating a metal plate on a metal plate so that the polyester resin layer (A) is in contact with the metal plate and then molding this (that is, a laminated metal plate) (for example, forming into a can) so that the film for laminating a metal plate becomes the inner surface. Since the thickness of the polyester resin layer (B) is 15 μm or less, it is possible to avoid excessive quality of the film for laminating a metal plate and to reduce the fabrication cost of the film for laminating a metal plate.

Item 12

The film for laminating a metal plate according to any one of items 1 to 11, in which

the metal plate is a metal plate that is molded into a member constituting a container for food and/or drink, and the film for laminating a metal plate is used so as to be disposed on the inner surface of the container.

Patent Document 2 mentioned above describes a two-layer laminated film but does not describe at all that the two-layer laminated film is colored with a pearl pigment.

EFFECT OF THE INVENTION

According to the film for laminating a metal plate of the present invention, it is possible to widen the choice of coloring agents (for example, to use an inorganic pigment) and give a gold tint to a laminated metal plate and a molded article.

MODE FOR CARRYING OUT THE INVENTION

Hereinafter, embodiments of the present invention will be described. In the following, the a* value is sometimes referred to as a*. In other words, the terms a* value and a* are used synonymously. Therefore, a* can be rephrased as a* value. In the following, the polyester resin is sometimes referred to as polyester. In other words, the terms polyester resin and polyester are used synonymously. Therefore, polyester can be rephrased as polyester resin.

<1. Oriented polyester film>

The film for laminating a metal plate of the present embodiment includes a polyester resin layer (A) and a polyester resin layer (B) that is in contact with the polyester resin layer (A). In other words, the film for laminating a metal plate includes a polyester resin layer (A) and a polyester resin layer (B) that is laminated on the polyester resin layer (A). One of the two surfaces of the film for laminating a metal plate is formed of the polyester resin layer (A). The other surface is formed of the polyester resin layer (B).

<1.1. Polyester resin layer (A)>

The polyester resin layer (A) contains a polyester resin and a pigment. In other words, the polyester resin layer (A) can be formed of a polyester composition containing a polyester resin and a pigment.

As the polyester resin, polyethylene terephthalate having ethylene terephthalate as a main repeating unit, polybutylene terephthalate having butylene terephthalate as a main repeating unit, and any combination thereof can be preferably exemplified. Hereinafter, polyethylene terephthalate and polybutylene terephthalate will be described in detail as representative examples of polyester.

Polyethylene terephthalate

Polyethylene terephthalate is a polyester composed of terephthalic acid as a dicarboxylic acid component and ethylene glycol as a diol component. Polyethylene terephthalate is not limited to a homopolymer, and may be copolymerized with other components as long as the effects of the present invention are not impaired, and the moldability is more likely to be improved by copolymerization.

The copolymerizable components of polyethylene terephthalate may be an acid component or an alcohol component. As copolymerizable dicarboxylic acid components, aromatic dicarboxylic acids such as isophthalic acid, phthalic acid, and naphthalene dicarboxylic acid; aliphatic dicarboxylic acids such as adipic acid, azelaic acid, sebacic acid, and decanedicarboxylic acid; alicyclic dicarboxylic acids such as cyclohexanedicarboxylic acid; and ester-forming derivatives thereof can be exemplified. As diol components to be copolymerized, aliphatic diols such as butanediol and hexanediol and alicyclic diols such as cyclohexanedimethanol can be exemplified. These may be used singly or two or more of these may be used.

The proportion of the copolymerizable components is preferably a proportion so that the melting point of polymer is in the range of 210°C to 256°C, preferably 215°C to 256°C, still more preferably 220°C to 256°C. The heat resistance is poor when the melting point of polymer is less than the lower limit, and the crystallinity of polymer is too great and the moldability is impaired when the melting point of polymer exceeds the upper limit.

The intrinsic viscosity of polyethylene terephthalate is preferably 0.50 to 0.80, more preferably 0.54 to 0.75,

particularly preferably 0.57 to 0.70. It is difficult to obtain a film having mechanical strength suitable for practical use when the intrinsic viscosity is less than the lower limit, and the moldability is likely to be impaired when the intrinsic viscosity exceeds the upper limit.

Incidentally, in a case where it is required to increase particularly the heat resistance, homopolyethylene terephthalate is preferable, and for example, homopolyethylene terephthalate in which the proportion of copolymerizable components is 0.3 mol% or less, more preferably 0.2 mol% or less, particularly 0.1 mol% or less is preferable.

Polybutylene terephthalate

Polybutylene terephthalate is a polyester composed of terephthalic acid as a dicarboxylic acid component and 1,4-butanediol as a diol component. As this polyester, it is preferable to use one that has undergone a solid phase polycondensation reaction after a melt polymerization reaction.

Polybutylene terephthalate is not limited to a homopolymer, and may be copolymerized with other components as long as the effects of the present invention are not impaired, and the copolymerizable components may be a dicarboxylic acid component or a diol component.

As copolymerizable dicarboxylic acid components of polybutylene terephthalate, aromatic dicarboxylic acids such as isophthalic acid, phthalic acid, and naphthalene dicarboxylic acid; aliphatic dicarboxylic acids such as adipic acid, azelaic acid, sebacic acid, and decanedicarboxylic acid; and alicyclic dicarboxylic acids such as cyclohexanedicarboxylic acid can be exemplified. Among these, isophthalic acid, 2,6-naphthalenedicarboxylic acid and adipic acid are preferable. As copolymerizable diol components, aliphatic diols such as ethylene glycol and hexanediol and alicyclic diols such as cyclohexanedimethanol can be exemplified. These may be used singly or two or more of these may be used.

The proportion of the copolymerizable components also depends on their kinds, but is a proportion so that the melting point of polymer is in the range of 180°C to 223°C, preferably 200°C to 223°C, still more preferably 210°C to 223°C. When the melting point of polymer is less than the lower limit, the crystallinity as polyester is low, and as a result, the heat resistance of film decreases.

The intrinsic viscosity of polybutylene terephthalate is preferably 0.60 to 2.00, still more preferably 0.80 to 1.70, particularly preferably 0.85 to 1.50. It is difficult to obtain a film having mechanical strength suitable for practical use when the intrinsic viscosity is less than the lower limit, and the productivity of polyester resin and film decrease when the intrinsic viscosity exceeds the upper limit.

As the polyester resin contained in the polyester resin layer (A), the aforementioned polyethylene terephthalate or a mixture of polyethylene terephthalate and polybutylene terephthalate is preferable and the aforementioned polyethylene terephthalate is more preferable. Among these, the aforementioned homopolyethylene terephthalate is preferable. In other words, polyethylene terephthalate that does not contain or substantially does not contain a copolymerizable component is preferable. When the polyester resin of the polyester resin layer (A) is homopolyethylene terephthalate, heat resistance of the polyester resin layer (A) can be enhanced. Incidentally, in a case where the polyester resin of the polyester resin layer (A) is a mixture of polyethylene terephthalate and polybutylene terephthalate, the mass ratio of polyethylene terephthalate to polybutylene terephthalate is preferably 100 : 0 to 30 : 70, still more preferably 70 : 30 to 30 : 70, particularly preferably 60 : 40 to 40 : 60. As polybutylene terephthalate is blended, it is possible to shorten the shortest crystallization half time and to suppress discoloration of the appearance after retorting to milky white in a spotted manner.

In a case of using a mixture of polyethylene terephthalate and polybutylene terephthalate, it is preferable from the standpoint of moldability that the mixture is uniformly kneaded in a molten state before film formation, and is partly subjected to the transesterification reaction at that time.

In a case of polymerizing the polyester resin, it is preferable to add a catalyst for polycondensation reaction and a catalyst for transesterification reaction as a catalyst for polymerization. Examples of the catalyst for transesterification reaction include calcium compounds, manganese compounds, germanium compounds, and titanium compounds, and examples of the catalyst for polycondensation reaction preferably include antimony compounds, aluminum compounds, germanium compounds, and titanium compounds. Among these, titanium compounds such as titanium acetate and tetrabutoxytitanium are preferable since the amount of catalyst can be minimized.

In order to acquire favorable heat stability and color, it is preferable to contain a stabilizer in the polyester resin, and for example, it is preferable to add a phosphoric acid-based stabilizer such as trimethyl phosphate.

The pigment of the polyester resin layer (A) includes at least one of an inorganic pigment or an organic pigment. In other words, the polyester resin layer (A) contains at least one of an inorganic pigment or an organic pigment. According to this, the polyester resin layer (A) can be effectively colored.

Between an inorganic pigment and an organic pigment, the pigment of the polyester resin layer (A) may include only an inorganic pigment, only an organic pigment, or both of an inorganic pigment and an organic pigment. Among these, it is preferable that the pigment of the polyester resin layer (A) includes only an inorganic pigment between an inorganic pigment and an organic pigment. According to this, it is possible to diminish changes in tint due to retorting

and changes in haze due to retorting as compared to the case where the pigment of the polyester resin layer (A) includes only an organic pigment between an inorganic pigment and an organic pigment. In other words, the resistance to retorting can be improved. Moreover, since the hiding power of the polyester resin layer (A) can be improved as compared to that case (specifically, a case where the pigment of the polyester resin layer (A) includes only an organic pigment between an inorganic pigment and an organic pigment), the influence of the tint of a metal plate on the tint of a laminated metal plate can be diminished. Therefore, it is possible to improve the degree of freedom in choosing the metal plate.

Examples of the inorganic pigment include red inorganic pigments and yellow inorganic pigments. Examples of red inorganic pigments include red iron oxide, vermilion, and cadmium red. Examples of yellow pigments include yellow lead, ocher, and cadmium yellow. Inorganic pigments may be, for example, natural mineral pigments or synthetic inorganic pigments. Examples of the color index (hereinafter referred to as "C.I.") of inorganic pigments include C.I. Pigment Red 101, 122, 259, 285, and 290; C.I. Pigment Blue 73; C.I. Pigment Yellow 42, 53, 93, 119, 151, 161, 184, 189, 214, and 215; C.I. Pigment Orange 79; C.I. Pigment Red 202 and 242; and C.I. Pigment Brown 11 and 24. It goes without saying that one or two or more of these can be used.

The weight loss rate of the inorganic pigment in a nitrogen atmosphere is preferably less than 1.5% by mass. When the weight loss rate is less than 1.5% by mass, the heat resistance of the inorganic pigment is excellent, and as a result, it is possible to diminish changes in tint due to retorting and changes in haze due to retorting. In other words, the resistance to retorting can be improved. The weight loss rate is preferably 1.0% by mass or less, more preferably 0.5% by mass or less. The weight loss rate may be 0.01% by mass or more, 0.03% by mass or more, or 0.05% by mass or more. The "weight loss rate" is specifically the weight loss rate of the inorganic pigment when the inorganic pigment is heated from room temperature to 300°C at a rate of temperature increase of 10°C/min in a nitrogen atmosphere. The value of weight loss rate is a value measured and calculated by the method described in Examples.

The content of the inorganic pigment is preferably 0.02% by mass or more, more preferably 0.1% by mass or more, still more preferably 0.2% by mass or more in 100% by mass of the polyester resin layer (A). When the content of the inorganic pigment is 0.02% by mass or more, the polyester resin layer (A) can be colored more effectively. The content of the inorganic pigment is preferably 5.0% by mass or less, more preferably 4.0% by mass or less, still more preferably 3.0% by mass or less, still more preferably 2.0% by mass or less, still more preferably 1.0% by mass or less in 100% by mass of the polyester resin layer (A). When the content of the inorganic pigment is 5.0% by mass or less, deterioration of dispersion of the inorganic pigment can be diminished or suppressed, and deterioration of film formability can be diminished or suppressed.

Examples of the organic pigment include azo pigments such as acetoacetanilide-based azo pigments; and quinacridone pigments (that is, quinacridone-based organic pigments). Among these, acetoacetanilide-based azo pigments and quinacridone-based organic pigments are preferable. When the organic pigment is these, it is possible to diminish changes in tint due to retorting and changes in haze due to retorting. In other words, the resistance to retorting can be improved.

The acetoacetanilide-based azo pigments are pigments represented by the following Structural Formula (1), and the quinacridone-based organic pigments are pigments represented by the following Structural Formula (2).

[Formula 1]

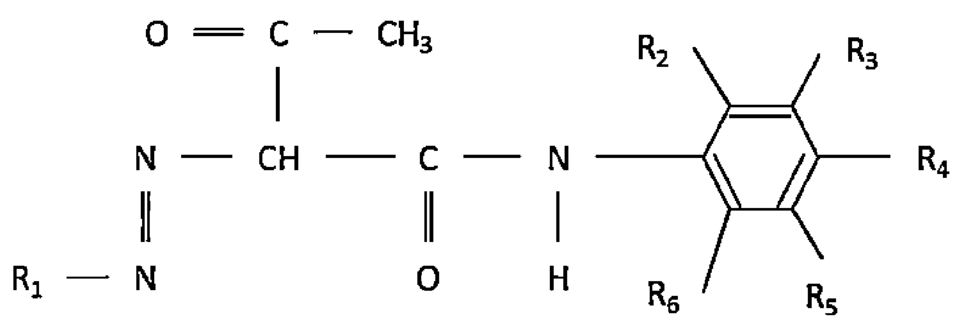

(1)

[Formula 2]

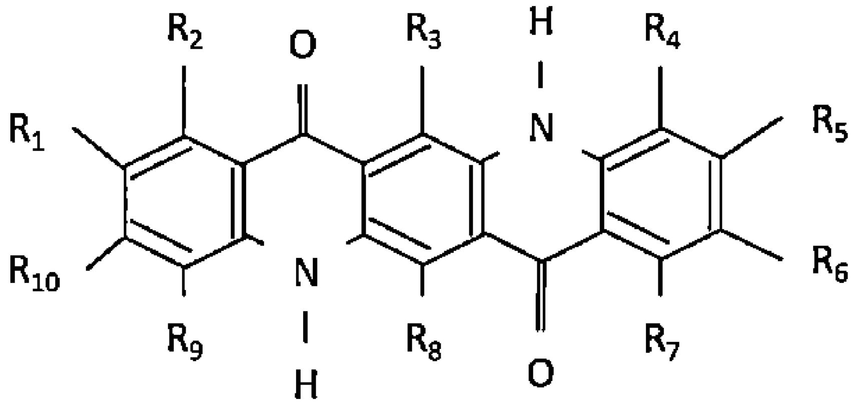

(2)

The acetoacetanilide-based azo pigment and the quinacridone-based organic pigment preferably exhibit a red or yellow color. Specific examples of these include compounds represented by the following Structural Formulas (3) to (6) .

[Formula 3]

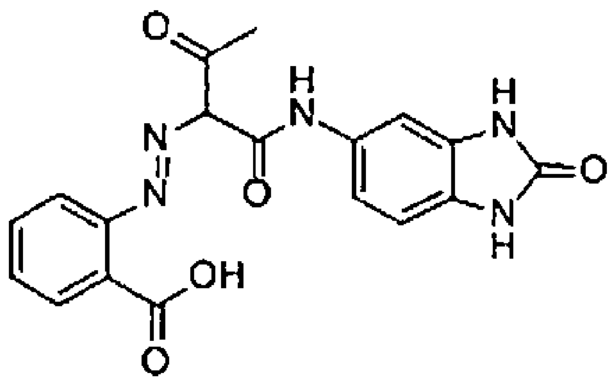

(3) (P.Y.151)

[Formula 4]

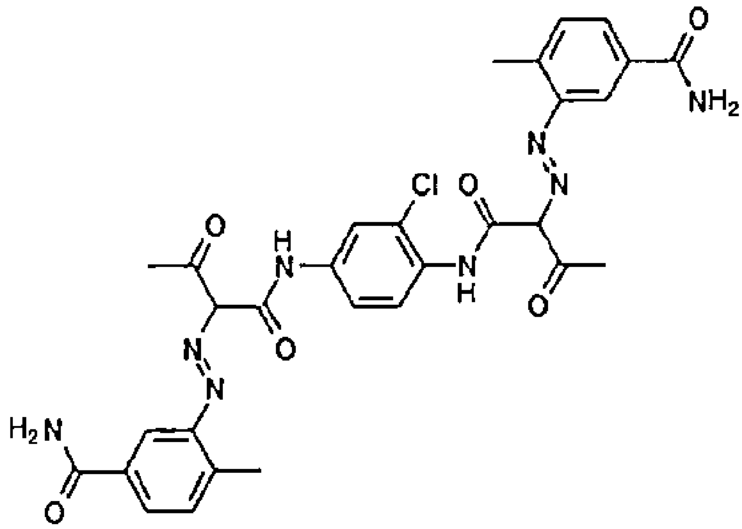

(4) (P.Y.214)

[Formula 5]

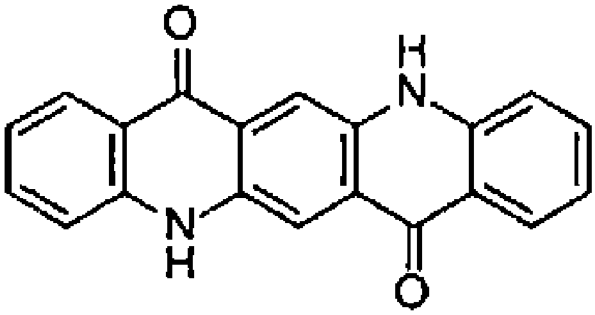

(5) (P.V.19)

[Formula 6]

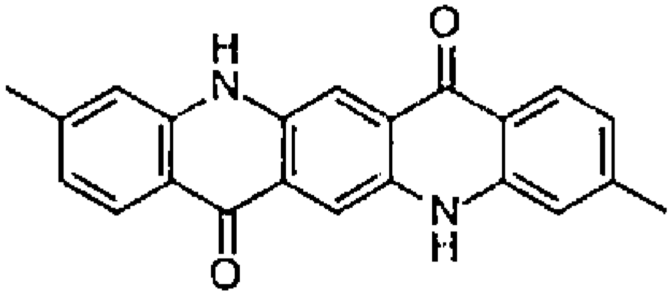

(6) (P.R.122)

The weight loss rate of the organic pigment in a nitrogen atmosphere is preferably less than 1.5% by mass. When the weight loss rate is less than 1.5% by mass, the heat resistance of the organic pigment is excellent, and as a result, it is possible to diminish changes in tint due to retorting and changes in haze due to retorting. In other words, the resistance to retorting can be improved. The weight loss rate is preferably 1.0% by mass or less, more preferably 0.5% by mass or less. The weight loss rate may be 0.01% by mass or more, 0.03% by mass or more, or 0.05% by mass or

more. The "weight loss rate" is specifically the weight loss rate of the organic pigment when the organic pigment is heated from room temperature to 300°C at a rate of temperature increase of 10°C/min in a nitrogen atmosphere. The value of weight loss rate is a value measured and calculated by the method described in Examples.

The content of the organic pigment is preferably 0.02% by mass or more, more preferably 0.1% by mass or more, still more preferably 0.2% by mass or more in 100% by mass of the polyester resin layer (A). When the content of the inorganic pigment is 0.02% by mass or more, the polyester resin layer (A) can be colored more effectively. The content of the organic pigment is preferably 5.0% by mass or less, more preferably 4.0% by mass or less, still more preferably 3.0% by mass or less, still more preferably 2.0% by mass or less, still more preferably 1.0% by mass or less in 100% by mass of the polyester resin layer (A). When the content of the organic pigment is 5.0% by mass or less, deterioration of dispersion of the organic pigment can be diminished or suppressed, and deterioration of film formability can be diminished or suppressed. In addition to this, bleed-out of the organic pigment can be diminished or suppressed.

In a case where the polyester resin layer (A) contains an inorganic pigment and an organic pigment, the total content of the inorganic pigment and the organic pigment is preferably 0.02% by mass or more, more preferably 0.1% by mass or more, still more preferably 0.2% by mass or more in 100% by mass of the polyester resin layer (A). When the content of the inorganic pigment is 0.02% by mass or more, the polyester resin layer (A) can be colored more effectively. The total content of the inorganic pigment and the organic pigment is preferably 5.0% by mass or less, more preferably 4.0% by mass or less, still more preferably 3.0% by mass or less, still more preferably 2.0% by mass or less, still more preferably 1.0% by mass or less in 100% by mass of the polyester resin layer (A). When the total content of the inorganic pigment and the organic pigment is 5.0% by mass or less, deterioration of dispersion of the inorganic pigment and the organic pigment can be diminished or suppressed, and deterioration of film formability can be diminished or suppressed.

The pigment of the polyester resin layer (A) further includes a pearl pigment. Since the polyester resin layer (A) contains a pearl pigment, it is possible to impart pearly feel to the gold tint of the laminated metal plate. In other words, a pearly luster can be imparted to the gold tint. Furthermore, since the polyester resin layer (A) contains a pearl pigment, the amount of inorganic pigment and/or organic pigment can be diminished as compared to the case of containing white titanium oxide (specifically, white titanium dioxide) instead of the pearl pigment. In other words, it is possible to give a gold tint to the laminated metal plate by containing a smaller amount of inorganic pigment and/or organic pigment than in that case (specifically, the case of containing titanium oxide pigment instead of a pearl pigment).

The pearl pigment preferably contains a substrate and a covering substance that covers the substrate. Mica is preferable as the substrate. When the substrate is mica, the pearl pigment has excellent mechanical strength, and as a result, for example, it is possible to suppress breakage of the pearl pigment during the fabrication process of the film for laminating a metal plate. Meanwhile, an oxide is preferable as the covering substance. As the oxide, for example, anatase-type titanium oxide, rutile-type titanium oxide, iron oxide, silicon oxide, and cobalt iron oxide are preferable. When the oxide is these, it is possible to effectively impart pearly feel to the gold tint of the laminated metal plate. In addition to this, these exhibit excellent physical and chemical stability, and as a result, for example, it is possible to enhance time-dependent stability of the gold tint of the laminated metal plate.

The pearl pigment preferably has a plate shape. The thickness of the pearl pigment is preferably 0.01 μm or more. When the thickness of the pearl pigment is 0.01 um or more, it is possible to suppress or reduce the breakage of the pearl pigment during the fabrication process of the film for laminating a metal plate. The thickness of the pearl pigment is preferably 10 μm or less. When the thickness of the pearl pigment is 10 μm or less, it is possible to further impart pearly feel to the gold tint of the laminated metal plate.

The average length of the pearl pigment is preferably 5 um to 80 um. When the average length of the pearl pigment is 5 μm or more, it is possible to decrease voids generated around the pearl pigment by stretching during extrusion molding. When the average length of the pearl pigment is 80 um or less, it is possible to decrease troubles in fabricating the film for laminating a metal plate. For example, in a case where extrusion molding is performed to fabricate the polyester resin layer (A), the stability of extrusion molding can be improved.

The weight loss rate of the pearl pigment in a nitrogen atmosphere is preferably less than 1.5% by mass. Since the weight loss rate is less than 1.5% by mass, the heat resistance of the pearl pigment is excellent, and as a result, it is possible to diminish changes in tint due to retorting and changes in haze due to retorting. In other words, the resistance to retorting can be improved. The weight loss rate is preferably 1.0% by mass or less, more preferably 0.5% by mass or less. The weight loss rate may be 0.01% by mass or more, 0.03% by mass or more, or 0.05% by mass or more. The "weight loss rate" is specifically the weight loss rate of the pearl pigment when the pearl pigment is heated from room temperature to 300°C at a rate of temperature increase of 10°C/min in a nitrogen atmosphere. The value of weight loss rate is a value measured and calculated by the method described in Examples.

The content of the pearl pigment is preferably 0.02% by mass or more, more preferably 0.1% by mass or more, still more preferably 0.5% by mass or more, still more preferably 1.0% by mass or more, still more preferably 1.5% by mass or more in 100% by mass of the polyester resin layer (A). When the content of the pearl pigment is 0.02% by mass or more, it is possible to effectively give a gold tint to the laminated metal plate as well as to further impart pearly feel to

the gold tint of the laminated metal plate. The content of the pearl pigment is preferably 10% by mass or less, more preferably 8.0% by mass or less, still more preferably 5.0% by mass or less, still more preferably 3.5% by mass or less, still more preferably 3.0% by mass or less in 100% by mass of the polyester resin layer (A). When the content of the pearl pigment is 10% by mass or less, it is possible to diminish changes in tint due to retorting and changes in haze due to retorting. It is also possible to decrease troubles in fabricating the film for laminating a metal plate. For example, in a case where stretching is performed to fabricate the film for laminating a metal plate, breakage of the film that may occur during stretching can be suppressed or diminished. In other words, the film formability can be improved.

The content of the pearl pigment may be the same as the content of the inorganic pigment, higher than the content of the inorganic pigment, or lower than the content of the inorganic pigment. The content of the pearl pigment is preferably higher than the content of the inorganic pigment.

The content of the pearl pigment may be the same as the content of the organic pigment, higher than the content of the organic pigment, or lower than the content of the organic pigment. The content of the pearl pigment is preferably higher than the content of the organic pigment.

The content of the pearl pigment may be the same as the total content of the inorganic pigment and the organic pigment, higher than the total content, or lower than the total content. The content of the pearl pigment is preferably higher than the total content.

The polyester resin layer (A) may further contain other pigments.

In a case where the pigment of the polyester resin layer (A) includes an inorganic pigment and a pearl pigment, the total amount of the inorganic pigment and the pearl pigment is preferably 80% by mass or more, more preferably 90% by mass or more, still more preferably 95% by mass or more, still more preferably 100% by mass or more in 100% by mass of the pigment. When the total amount of the inorganic pigment and the pearl pigment is 80% by mass or more, the resistance to retorting of the film for laminating a metal plate can be improved.

The polyester resin layer (A) may further contain other additives. Examples of the other additives include dyes, fine particles, and stabilizers (for example, the stabilizers mentioned above). However, the polyester resin layer (A) preferably does not contain a dye.

When the film for laminating a metal plate contains fine particles, it is possible to improve the handleability, particularly the windability in the film manufacturing process. The fine particles preferably have an average particle size of 2.5 μm or less, more preferably 0.01 um to 1.8 μm. The content of fine particles is preferably 0.01 parts by mass to 1 part by mass, still more preferably 0.01 parts by mass to 0.5 parts by mass with respect to 100 parts by mass of the polyester resin. As the fine particles, either of inorganic fine particles or organic fine particles may be used, but inorganic fine particles are preferably used. As the inorganic fine particles, silica, alumina, titanium dioxide, calcium carbonate, and barium sulfate can be exemplified. As the organic fine particles, crosslinked polystyrene particles and crosslinked silicone resin particles can be exemplified.

The average particle size of fine particles is preferably 2.5 μm or less. When the average particle size of fine particles is 2.5 um or less, the generation of pinholes can be suppressed. Fine particles that are particularly preferable in terms of pinhole resistance are monodisperse fine particles having an average particle size of 2.5 um or less and a particle size ratio (major axis/minor axis) of 1.0 to 1.2. As the fine particles, spherical silica, spherical titanium dioxide, spherical zirconium, and spherical crosslinked silicone resin particles can be exemplified.

The thickness of the polyester resin layer (A) is preferably 5 um or more, more preferably 10 um or more. When the thickness of the polyester resin layer (A) is 5 um or more, it is possible to further give a gold tint to the laminated metal plate. The thickness of the polyester resin layer (A) is preferably 50 μm or less, more preferably 40 um or less, still more preferably 30 um or less, still more preferably 25 μm or less. When the thickness of the polyester resin layer (A) is 50 μm or less, it is possible to avoid excessive quality of the film for laminating a metal plate and to reduce the fabrication cost of the film for laminating a metal plate.

<1.2. Polyester resin layer (B)>

The film for laminating a metal plate includes a polyester resin layer (B). Since the film for laminating a metal plate includes a polyester resin layer (B), it is possible to prevent the polyester resin layer (A) from coming into contact with the contents (for example, food and/or drink such as tomatoes, pickles, and salmon) of molded articles (for example, cans) by, for example, laminating the film for laminating a metal plate on a metal plate so that the polyester resin layer (A) is in contact with the metal plate and then molding this (that is, a laminated metal plate) (for example, forming into a can) so that the film for laminating a metal plate becomes the inner surface. As a result, the pigment contained in the polyester resin layer (A) can be prevented from migrating into the contents.

The polyester resin layer (B) contains a polyester resin. In other words, the polyester resin layer (A) can be formed of a polyester composition containing a polyester resin.

Description of the polyester resin contained in the polyester resin layer (B) overlaps with the description of the polyester resin contained in the polyester resin layer (A) and is omitted. Therefore, the description of the polyester resin

contained in the polyester resin layer (A) can also be treated as the description of the polyester resin contained in the polyester resin layer (B). For example, as the polyester resin contained in the polyester resin layer (B), the aforementioned polyethylene terephthalate is preferable and the aforementioned homopolyethylene terephthalate is more preferable. When the polyester resin of the polyester resin layer (B) is homopolyethylene terephthalate, heat resistance of the polyester resin layer (B) can be enhanced.

The polyester resin layer (B) substantially does not contain a pigment. Since the polyester resin layer (B) substantially does not contain a pigment, it is possible to further prevent the pigment from being mixed into the contents. Here, the aforementioned "the polyester resin layer (B) substantially does not contain a pigment" means that the polyester resin layer (B) does not contain a pigment at all, or the polyester resin layer (B) contains a pigment at 0.01% by mass or less in 100% by mass of the polyester resin layer (B). The polyester resin layer (B) preferably does not contain a pigment at all. Examples of the pigment include organic pigments, inorganic pigments, and pearl pigments.

The polyester resin layer (B) preferably does not substantially contain a dye at all. Here, this means that the polyester resin layer (B) does not contain a dye at all, or the polyester resin layer (B) contains a dye at 0.01% by mass or less in 100% by mass of the polyester resin layer (B). The polyester resin layer (B) preferably does not contain a dye at all.

These may be summarized as follow: the polyester resin layer (B) preferably does not substantially contain a coloring agent (for example, a pigment or a dye). Here, this means that the polyester resin layer (B) does not contain a coloring agent at all, or the polyester resin layer (B) contains a coloring agent at 0.01% by mass or less in 100% by mass of the polyester resin layer (B). The polyester resin layer (B) preferably does not contain a coloring agent at all.

The polyester resin layer (B) may further contain other additives. Examples of the other additives include fine particles. Description of the fine particles of the polyester resin layer (B) overlaps with the description of the fine particles of the polyester resin layer (A), and is omitted. Therefore, the description of the fine particles of the polyester resin layer (A) can also be treated as the description of the fine particles of the polyester resin layer (B).

The thickness of the polyester resin layer (B) is preferably 0.5 um or more, more preferably 1.0 μm or more, still more preferably 2.0 μm or more, still more preferably 3.0 um or more. Since the thickness of the polyester resin layer (B) is 0.5 μm or more, it is possible to further prevent the pigment contained in the polyester resin layer (A) from migrating to the contents of molded articles (for example, cans) by, for example, laminating the film for laminating a metal plate on a metal plate so that the polyester resin layer (A) is in contact with the metal plate and then molding this (that is, a laminated metal plate) (for example, forming into a can) so that the film for laminating a metal plate becomes the inner surface. The thickness of the polyester resin layer (B) is preferably 15 μm or less, more preferably 10 μm or less, still more preferably 8 μm or less. Since the thickness of the polyester resin layer (B) is 15 μm or less, it is possible to avoid excessive quality of the film for laminating a metal plate and to reduce the fabrication cost of the film for laminating a metal plate.

<1.3.Properties of film for laminating metal plate>

The film for laminating a metal plate has an a* value of -5 to 20 and a b* value of 0 to 50. According to this, since the film for laminating a metal plate has an a* value of -5 to 20 and a b* value of 0 to 50 and the polyester resin layer (A) contains a pearl pigment, it is possible to widen the choice of coloring agents as well as to give a gold tint to a metal plate laminated with the film for laminating a metal plate (that is, a laminated metal plate). This will be explained. If the polyester resin layer (A) contains an inorganic pigment but does not contain a pearl pigment, it is difficult to give a gold tint to the laminated metal plate. This is because voids caused by the inorganic pigment increase the haze of the film for laminating a metal plate and decrease the total light transmittance and the metallic luster of the metal plate cannot be effectively utilized. According to item 1,in a case where the polyester resin layer (A) contains an inorganic pigment as well, it is possible to give a gold tint to the laminated metal plate by the luster of the pearl pigment. Thus, since the polyester resin layer (A) contains a pearl pigment, it is possible to use an inorganic pigment. In other words, it is possible to widen the choice of coloring agents. The a* value and b* value are values measured in conformity with JIS Z 8722:2009, and specifically, values measured by the method described in Examples.

Regarding the glossiness of the film for laminating a metal plate, it is preferable that the film for laminating a metal plate satisfies the following formula.

$$|Gs_{85} - Gs_{45}|/|Gs_{85} - Gs_{60}| \geq 1.6$$

where Gsss is 85-degree specular gloss, $Gs_{45}$ is 45-degree specular gloss, and $Gs_{60}$ is 60-degree specular gloss.

$|Gs_{85} - Gs_{45}|/|Gs_{85} - Gs_{60}|$, that is, Gar is an index of pearly feel, that is, an index of pearly luster. As Gar is larger, the pearly feel of the laminated metal plate obtained by laminating the film for laminating a metal plate on a metal plate tends to be stronger. According to the formula, since Gar is 1.6 or more, it is possible to further impart pearly feel to the gold tint of the laminated metal plate. Gar may be, for example, 3.0 or less, or 2.5 or less. $Gs_{85}$, $Gs_{45}$, and $Gs_{60}$

are values measured in conformity with JIS Z 8741:1997, and specifically, values measured by the method described in Examples.

$Gs_{85}$ of the film for laminating a metal plate, that is, the 85-degree specular gloss may be, for example, 50 or more, 55 or more, or 60 or more. $Gs_{85}$ may be, for example, 97 or less, 95 or less, or 90 or less.

The total light transmittance of the film for laminating a metal plate may be, for example, 50% or more, or 60% or more. The total light transmittance of the film for laminating a metal plate may be, for example, 95% or less, or 90% or less. The total light transmittance is a value measured by the method described in Examples.

The haze of the film for laminating a metal plate may be, for example, 15% or more, 20% or more, or 25% or more. The haze of the film for laminating a metal plate may be, for example, 90% or less, or 80% or less. The haze is a value measured by the method described in Examples.

The color difference $\Delta E^*$ before and after retorting at 130°C for 120 minutes is preferably less than 10. According to this, since changes in tint due to retorting are not excessively large, it is possible to give a gold tint to the laminated metal plate after retorting and its molded article as well. $\Delta E^*$ is preferably 8 or less, more preferably 5 or less. $\Delta E^*$ is a value measured by the method described in Examples.

The amount of change in haze $\Delta Hz$ before and after retorting at 130°C for 120 minutes is preferably less than 15, more preferably 12 or less, still more preferably 10 or less. The value of $\Delta Hz$ is a value measured and calculated by the method described in Examples.

The thickness of the film for laminating a metal plate, that is, the total thickness is preferably 5.5 um or more, more preferably 10 um or more. The thickness of the film for laminating a metal plate, that is, the total thickness is preferably 65 μm or less, more preferably 50 um or less, still more preferably 40 μm or less, still more preferably 30 μm or less.

<2. Method for fabricating film for laminating metal plate>

The film for laminating a metal plate can be fabricated by, for example, the following procedure: a polyester composition for forming the polyester resin layer (A) (hereinafter sometimes referred to as "polyester composition (A)") is supplied to a first extruder as well as a polyester composition for forming the polyester resin layer (B) (hereinafter sometimes referred to as "polyester composition (B)") is supplied to a second extruder, next, the polyester composition (A) is led from the first extruder to the feed block as well as the polyester composition (B) is led from the second extruder to the feed block, these are laminated in the feed block, this is then melt-extruded through a die, this is then solidified on cooling rolls, and this is biaxially stretched. The biaxial stretching may be simultaneous biaxial stretching in the machine and transverse directions, or sequential biaxial stretching. Among these, sequential biaxial stretching is preferable. In sequential biaxial stretching, it is preferable to stretch, for example, an unstretched film that has passed through cooling rolls in the machine direction (hereinafter referred to as "MD") and the sheet after being stretched in the MD direction in the transverse direction (hereinafter referred to as "TD"). The temperature for stretching in the MD direction, the stretching ratio in the MD direction, the temperature for stretching in the TD direction, and the stretching ratio in the TD direction can be appropriately set.

The method for blending a pigment is not particularly limited. For example, the pigment may be blended in the production process (for example, polymerization process) of the raw material resin, or may be blended into the finished raw material resin using a melt kneader or the like. Master chips of raw material resin containing a pigment at a high concentration is produced in advance using, for example, a twin screw extruder, and mixed with raw material resin chips that do not contain a pigment or contain a pigment at a low concentration, whereby a polyester composition (for example, polyester resin layer (A)) containing a pigment at the desired concentration may be prepared. In particular, the method using master chips is preferable since it is easy to uniformly disperse the pigment and to adjust the pigment content.

<3.Use example of film for laminating metal plate>

The film for laminating a metal plate can be used as a film to be laminated on a metal plate such as tinplate, tin-free steel, tin-nickel steel, or aluminum. A metal plate laminated with the film for laminating a metal plate, that is, a laminated metal plate can be molded. It is preferable that the metal plate is a metal plate that is molded into a member constituting a container for food and/or drink. The film for laminating a metal plate may be used so that the film for laminating a metal plate is disposed on the inner surface of the container, or may be used so that the film for laminating a metal plate is disposed on the outer surface of the container. Among these, the film for laminating a metal plate is more preferably used so that the film for laminating a metal plate is disposed on the inner surface of the container. A can is preferable as the container for food and/or drink. Examples of the can include beverage cans and food cans. Examples of the member constituting a can for food and/or drink include a body, a base, a lid, or any combination thereof.

<4. Various modifications can be made to embodiment described above>

Various modifications can be made to the embodiment described above. For example, one or more of the following variations can be selected and modifications can be made to the embodiment described above.

In the embodiment described above, the configuration has been described in which the film for laminating a metal plate has a two-layer structure composed of the polyester resin layer (A) and the polyester resin layer (B). However, the embodiment described above is not limited to this configuration. For example, the film for laminating a metal plate may have a single-layer structure composed of the polyester resin layer (A). As an example separate from this, the film for laminating a metal plate may include layers other than the polyester resin layer (A) and the polyester resin layer (B). In this case as well, one of the two surfaces of the film for laminating a metal plate is preferably formed of the polyester resin layer (A). In addition to this, the other surface is preferably formed of the polyester resin layer (B).

In the embodiment described above, the configuration has been described in which the polyester resin layer (B) substantially does not contain a pigment. However, the embodiment described above is not limited to this configuration. For example, the polyester resin layer (B) may contain a pigment at more than 0.01% by mass in 100% by mass of the polyester resin layer (B). The pigment content in the polyester resin layer (B) is preferably lower than the pigment content in the polyester resin layer (A).

In the embodiment described above, the configuration has been described in which the film for laminating a metal plate is a biaxially stretched film. In other words, the configuration has been described in which the film for laminating a metal plate is a biaxially oriented film. However, the embodiment described above is not limited to this configuration. The film for laminating a metal plate may be an unstretched film, or a uniaxially stretched film.

EXAMPLES

Hereinafter, the present invention will be described in detail with reference to Examples, but the present invention is not limited only to these Examples. Parts and % in Examples mean parts by mass and % by mass, respectively, unless otherwise stated.

<Methods for measuring respective properties>

(1) Thickness of each layer

A film sample of 2 mm in the machine direction and 2 cm in the transverse direction was cut out from the biaxially oriented laminated film, and this was fixed to the embedding capsule and then embedded in an epoxy resin. The embedded film sample was cut perpendicularly to the transverse direction using a microtome (Supercut manufactured by Reichert-Jung) to obtain a thin slice having a thickness of 50 μm. This slice was observed and photographed at an acceleration voltage of 20 kV using a scanning electron microscope (4300SE/N manufactured by Hitachi High-Tech Corporation), and the thickness of each layer was measured from the photograph. By this technique, the average thickness of five samples was determined. The average thickness thus determined is presented in Tables 1 and 2 as the thickness of each layer.

(2) Intrinsic viscosity

The intrinsic viscosity was measured at 35°C using o-chlorophenol.

(3) Melting point

For the film sample cut out from the biaxially oriented laminated film, the melting peak temperature of the film sample was determined at a rate of temperature increase of 20°C/min using a differential scanning calorimeter DSC (Q100 manufactured by TA Instruments). The sample amount was about 20 mg.

(4) Weight loss rate of pigment in air atmosphere

Using a thermogravimetric analyzer TGA (Q50 manufactured by TA Instruments), the temperature was changed from 30°C to 300°C at a rate of temperature increase of 10°C/min. and kept at 300°C for 30 minutes in an air atmosphere (atmospheric flow rate of 60 mL/min.), and the weight loss rate was determined from the amount of change in weight of the pigment. The sample amount was 10 mg.

(5) Weight loss rate of pigment in nitrogen atmosphere

Using a thermogravimetric analyzer TGA (Q50 manufactured by TA Instruments), the temperature was changed from 30°C to 300°C at a rate of temperature increase of 10°C/min. and kept at 300°C for 30 minutes in a nitrogen atmosphere (nitrogen flow rate of 60 mL/min.), and the weight loss rate was determined from the amount of change in weight of the pigment. The sample amount was 10 mg.

(6) Color

One 5 cm square film sample cut out from the biaxially oriented laminated film was brought into close contact with a black standard plate (specifically, black glass BK-7 standard plate (for backing)) via ion exchanged water, and then the color tone (L*, a*, b*) of the film sample, L*, a*, and b* was measured in conformity with JIS Z 8722:2009 by a reflection method using a color difference meter (300A manufactured by NIPPON DENSHOKU INDUSTRIES Co., Ltd.). In this procedure, the layer B of the film sample was brought into close contact with the black standard plate. After that, E* was determined by the following formula.

$$E^* = [(L^*)^2 + (a^*)^2 + (b^*)^2]^{1/2}$$

(7) Total light transmittance and haze

The total light transmittance and haze of one 5 cm square film sample cut out from the biaxially oriented laminated film were measured in conformity with JIS K 7136:2000 using a haze meter NDH2000 (manufactured by NIPPON DENSHOKU INDUSTRIES Co., Ltd.).

(8) Glossiness

One 5 cm square film sample cut out from the biaxially oriented laminated film was brought into close contact with a black standard plate (specifically, black glass BK-7 standard plate (for backing)) via ion exchanged water, and then the glossiness of the film sample was determined in terms of 45-degree specular gloss (namely, $Gs_{45}$) at incident and acceptance angles of 45° in conformity with JIS Z 8741:1997 using a gloss meter (manufactured by NIPPON DENSHOKU INDUSTRIES Co., Ltd.). In this procedure, the layer B of the film sample was brought into close contact with the black standard plate. The incident and acceptance angles were changed to determine the 60-degree specular gloss (namely, Gs60) and 85-degree specular gloss (namely, Gs85) as well. From the results of this measurement, Gar was calculated using the following formula.

$$Gar = |Gs_{85} - Gs_{45}| / |Gs_{85} - Gs_{60}|$$

In a preliminary experiment, it has been found that the pearly feel of a laminated metal plate obtained by laminating a biaxially oriented laminated film on a metal plate (specifically, tin-free steel (bright finish)) tends to be stronger as the Gar is larger, and Gar is positioned as an index of pearly feel, that is, an index of pearly luster.

(9) Property to develop gold color

For one 5 cm square film sample cut out from the biaxially oriented laminated film, a* and b* were measured in conformity with JIS Z 8722:2009 using a color difference meter (Automatic SE6000 manufactured by NIPPON DENSHOKU INDUSTRIES Co., Ltd.), and the property to develop gold color of the film sample was evaluated according to the following criteria. This measurement was performed by a reflection method using a white plate attached to the instrument as a film sample holder.

Excellent: a* is -15 to 15 and b* is 5 to 45.
Favorable: a* is -30 to 20 and b* is -10 to 70 (but does not correspond to Excellent).
Acceptable: a* is -30 to 20 but b* is outside the range of -10 to 70.
Poor: a* is outside the range of -30 to 20 and b* is also outside the range of -10 to 70.

(10) Resistance to retorting

A film sample cut out from the biaxially oriented laminated film was retorted at 130°C for 120 minutes, and then the color tone ($L^*$, $a^*$, $b^*$) of the film sample before and after retorting was measured. From the results of this measurement, the color difference $\Delta E^*$ was calculated by the following formula.

$$\Delta E^* = [(\Delta L^*)^2 + (\Delta a^*)^2 + (\Delta b^*)^2]^{1/2}$$

$\Delta L^*$ = Difference in $L^*$ of film sample before and after retorting
$\Delta a^*$ = Difference in $a^*$ of film sample before and after retorting
$\Delta b^*$ = Difference in $b^*$ of film sample before and after retorting
$\Delta E^*$ = was evaluated according to the folowing criteria.

Favorable: $\Delta E^*$ is 5 or less
Acceptable: $\Delta E^*$ is more than 5 and less than 10
Poor: $\Delta E^*$ is 10 or more

In addition to this, the haze of the film sample before and after retorting was measured using a haze meter NDH2000 (manufactured by NIPPON DENSHOKU INDUSTRIES Co., Ltd.). From the results of this measurement, the amount of change in haze $\Delta Hz$ was calculated by the following formula.

$\Delta Hz$ = (haze after retorting) - (haze before retorting)

$\Delta Hz$ was evaluated according to the following criteria.

Favorable: $\Delta Hz$ is 10 or less
Acceptable: $\Delta Hz$ is more than 10 and less than 15
Poor: $\Delta Hz$ is 15 or more

<Raw materials (namely, polyester resins and additives)

Polyester resin for layer A Homopolyethylene terephthalate having intrinsic viscosity of 0.68 dl/g and not containing copolymerizable component
Polyester resin for layer B Ditto (namely, homopolyethylene terephthalate having intrinsic viscosity of 0.68 dl/g and not containing copolymerizable component)

Inorganic pigment A Deep yellowish
Inorganic pigment B Reddish
Inorganic pigment C Yellowish
Inorganic pigment D Pale yellowish
Inorganic pigment E Bluish
Organic pigment A C.I. Pigment Yellow 151, acetoacetanilide-based azo pigment
Organic pigment B C.I. Pigment Yellow 214, acetoacetanilide-based azo pigment
Organic pigment C C.I. Pigment Yellow 191.1, organic pigment that is neither acetoacetanilide-based azo pigment nor quinacridone-based organic pigment
Pearl pigment A Goldish, covering substrate with iron oxide and titanium oxide
Pearl pigment B Goldish, covering substrate with iron oxide and titanium oxide
Pearl pigment C Goldish, covering substrate with iron oxide and titanium oxide
Titanium oxide Titanium white

In the following, inorganic pigments (specifically inorganic pigments A to E) and organic pigments (specifically organic pigments A to C) are sometimes collectively referred to as color pigments. Pearl pigments (specifically pearl pigments A to C) and titanium oxide (specifically titanium white) are sometimes collectively referred to as luster pigments.

<All Examples and Comparative Examples>

According to the formulations presented in Tables 1 and 2, a polyester composition for layer A, specifically, a composition containing a polyester resin for layer A and a pigment was prepared. The polyester composition for layer A and the polyester resin for layer B were dried, and then the polyester composition for layer A was supplied to a first extruder heated to 270°C as well as the polyester resin for layer B was supplied to a second extruder heated to 270°C. The polyester composition for layer A was led from the first extruder to the feed block as well as the polyester resin for layer B was led from the second extruder to the feed block, and these were laminated in the feed block, melt-extruded through a die, and cooled in a rotary cooling drum. The unstretched film fabricated by this procedure was stretched 3.2-fold in the machine direction at 85°C, then stretched 3.8-fold in the transverse direction at 105°C, and heat-set at 200°C. By this procedure, a biaxially oriented laminated film having a thickness of 20 μm and including a layer A and a layer B was obtained.

[Table 1]

| | | | | | Example 1 | Example 2 | Example 3 | Example 4 | Example 5 | Example 6 | Example 7 | Example 8 | Example 9 | Example 10 | Example 11 | Example 12 |
|---|---|---|---|---|---|---|---|---|---|---|---|---|---|---|---|---|
| Configuration of film | Thickness | | Layer A | μm | 15 | 15 | 15 | 15 | 15 | 15 | 15 | 15 | 15 | 15 | 15 | 15 |
| | | | Layer B | μm | 5 | 5 | 5 | 5 | 5 | 5 | 5 | 5 | 5 | 5 | 5 | 5 |
| | Layer A | Color pigment | Kind | | Inorganic pigment A | Inorganic pigment A | Inorganic pigment A | Inorganic pigment A | Inorganic pigment A | Inorganic pigment A | Inorganic pigment A | Inorganic pigment A | - | Inorganic pigment B | Inorganic pigment C | Inorganic pigment D |
| | | | Added concentration | % | 0.5 | 1.0 | 0.1 | 0.5 | 0.5 | 0.5 | 0.5 | 0.5 | - | 0.5 | 0.5 | 0.5 |
| | | | Weight loss rate % | Air | 0.8 | 0.8 | 0.8 | 0.8 | 0.8 | 0.8 | 0.8 | 0.8 | - | 1.1 | 0.7 | 1.0 |
| | | | | $N_2$ | 0.2 | 0.2 | 0.2 | 0.2 | 0.2 | 0.2 | 0.2 | 0.2 | - | 0.5 | 0.3 | 0.4 |
| | | | Kind | | - | - | - | Organic pigment A | - | - | - | - | Organic pigment B | - | - | - |
| | | | Added concentration | % | - | - | - | 0.1 | - | - | - | - | 0.5 | - | - | - |
| | | | Weight loss rate % | Air | - | - | - | 1.2 | - | - | - | - | 1.9 | - | - | - |
| | | | | $N_2$ | - | - | - | 0.7 | - | - | - | - | 0.1 | - | - | - |
| | | Luster pigment | Kind | | Pearl A | Pearl A | Pearl A | Pearl A | Pearl B | Pearl C | Pearl A | Pearl A | Pearl A | Pearl A | Pearl A | Pearl A |
| | | | Particle size | μm | 20 | 20 | 20 | 20 | 5 | 80 | 20 | 20 | 20 | 20 | 20 | 20 |
| | | | Added concentration | % | 2 | 2 | 2 | 2 | 2 | 2 | 0.1 | 5 | 2 | 2 | 2 | 2 |
| | | | Weight loss rate % | Air | 0.3 | 0.3 | 0.3 | 0.3 | 0.4 | 0.6 | 0.3 | 0.3 | 0.3 | 0.3 | 0.3 | 0.3 |
| | | | | $N_2$ | 0.1 | 0.1 | 0.1 | 0.1 | 0.2 | 0.3 | 0.1 | 0.1 | 0.1 | 0.1 | 0.1 | 0.1 |

(continued)

| | | | Example 1 | Example 2 | Example 3 | Example 4 | Example 5 | Example 6 | Example 7 | Example 8 | Example 9 | Example 10 | Example 11 | Example 12 |
|---|---|---|---|---|---|---|---|---|---|---|---|---|---|---|
| Physical properties of film | Color of film | L* | 38 | 37 | 41 | 35 | 39 | 42 | 30 | 45 | 34 | 37 | 33 | 27 |
| | | a* | -1 | -2 | -2 | 5 | -4 | 0 | -3 | -1 | 17 | 19 | 1 | -5 |
| | | b* | 18 | 15 | 2 | 22 | 12 | 8 | 10 | 5 | 14 | 18 | 1 | 1 |
| | | E* | 42 | 40 | 41 | 42 | 41 | 43 | 32 | 45 | 41 | 45 | 33 | 27 |
| | Total light transmittance | % | 72 | 76 | 70 | 71 | 75 | 68 | 84 | 67 | 65 | 73 | 81 | 84 |
| | Haze | % | 55 | 60 | 45 | 58 | 45 | 66 | 33 | 75 | 57 | 64 | 40 | 30 |
| | Glossiness | $Gs_{45}$ | 135 | 138 | 137 | 132 | 130 | 140 | 210 | 170 | 136 | 136 | 134 | 140 |
| | | $Gs_{60}$ | 105 | 104 | 102 | 109 | 100 | 113 | 162 | 129 | 110 | 111 | 109 | 105 |
| | | $Gs_{85}$ | 70 | 65 | 68 | 73 | 75 | 78 | 86 | 69 | 83 | 74 | 71 | 68 |
| | Gar | | 1.86 | 1.87 | 2.03 | 1.64 | 2.20 | 1.77 | 1.63 | 1.68 | 1.96 | 1.68 | 1.66 | 1.95 |
| | Property to develop gold color | | Favorable | Favorable | Favorable | Excellent | Favorable | Excellent | Favorable | Favorable | Favorable | Favorable | Favorable | Favorable |
| | Resistance to retorting | $\Delta E^*$ | Favorable | Acceptable | Favorable | Favorable | Favorable | Acceptable | Favorable | Acceptable | Acceptable | Favorable | Favorable | Favorable |
| | | $\Delta Hz$ | Favorable | Acceptable | Favorable | Acceptable | Favorable | Acceptable | Favorable | Acceptable | Acceptable | Favorable | Favorable | Favorable |

[Table 2]

| | | | | | Comparative Example 1 | Comparative Example 2 | Comparative Example 3 | Comparative Example 4 | Comparative Example 5 |
|---|---|---|---|---|---|---|---|---|---|
| Configuration of film | Thickness | | Layer A | μm | 15 | 15 | 15 | 15 | 15 |
| | | | Layer B | μm | 5 | 5 | 5 | 5 | 5 |
| | Layer A | Color pigment | Kind | | Inorganic pigment A | - | Inorganic pigment E | - | Inorganic pigment A |
| | | | Added concentration | % | 0.5 | - | 0.5 | - | 0.5 |
| | | | Weight loss rate % | Air | 0.8 | - | 0.8 | - | 0.8 |
| | | | | $N_2$ | 0.2 | - | 0.2 | - | 0.2 |
| | | | Kind | | - | - | - | Organic pigment C | - |
| | | | Added concentration | % | - | - | - | 0.5 | - |
| | | | Weight loss rate % | Air | - | - | - | 3.2 | - |
| | | | | $N_2$ | - | - | - | 1.6 | - |
| | | Luster pigment | Kind | | - | Pearl A | Pearl A | Pearl A | Titanium oxide |
| | | | Particle size | μm | - | 20 | 20 | 20 | 10 |
| | | | Added concentration | % | | 2 | 2 | 2 | 2 |
| | | | Weight loss rate % | Air | - | 0.3 | 0.3 | 0.3 | 0.6 |
| | | | | $N_2$ | - | 0.1 | 0.1 | 0.1 | 0.3 |

(continued)

| | | | Comparative Example 1 | Comparative Example 2 | Comparative Example 3 | Comparative Example 4 | Comparative Example 5 |
|---|---|---|---|---|---|---|---|
| Physical properties of film | Color of film | L* | 21 | 42 | 10 | 30 | 50 |
| | | a* | -7 | -1 | -7 | 23 | 0 |
| | | b* | 8 | -1 | -1 | 12 | 2 |
| | | E* | 24 | 42 | 12 | 40 | 50 |
| | Total light transmittance | % | 82 | 70 | 75 | 70 | 78 |
| | Haze | % | 38 | 63 | 59 | 65 | 34 |
| | Glossiness | $Gs_{45}$ | 45 | 137 | 135 | 128 | 150 |
| | | $Gs_{60}$ | 22 | 108 | 105 | 110 | 127 |
| | | $Gs_{85}$ | 32 | 82 | 70 | 77 | 82 |
| | Gar | | 1.30 | 2.12 | 1.86 | 1.55 | 1.51 |
| | Property to develop gold color | | Acceptable | Acceptable | Poor | Poor | Favorable |
| | Resistance to retorting | ΔE' | Favorable | Favorable | Favorable | Acceptable | Favorable |
| | | ΔHz | Favorable | Favorable | Favorable | Poor | Acceptable |

Supplementary explanation of Tables 1 and 2 is provided. "Pearl" in Tables 1 and 2 means a pearl pigment. Therefore, for example, "Pearl A" means the pearl pigment A.

A biaxially oriented laminated film including a layer A containing only an inorganic pigment as a coloring agent was not able to give a gold tint to a metal plate laminated with the biaxially oriented laminated film (namely, a laminated metal plate) (see Comparative Example 1).

Meanwhile, a biaxially oriented laminated film including a layer A containing an inorganic pigment and a pearl pigment was able to give a gold tint to the laminated metal plate by adjusting a* and b* as well as to impart pearly feel to the tint (see Examples 1 to 8 and 10 to 12. See Comparative Example 3 if necessary).

A biaxially oriented laminated film including a layer A containing only an inorganic pigment and white titanium oxide (specifically, titanium white) as a coloring agent was able to give a gold tint to the laminated metal plate but was not able to impart pearly feel to the tint (see Comparative Example 5).

A biaxially oriented laminated film including a layer A containing an organic pigment together with a pearl pigment was also able to give a gold tint to the laminated metal plate by adjusting a* and b* as well as to impart pearly feel to the tint (see Example 9. See Comparative Example 4 if necessary). Incidentally, a biaxially oriented laminated film fabricated using the organic pigment B had a small change in haze due to retorting, that is, a small ΔE* compared to a biaxially oriented laminated film fabricated using the organic pigment C (see Example 9 and Comparative Example 4).

## Claims

**1.** A film for laminating a metal plate, the film comprising a polyester resin layer (A), wherein

the polyester resin layer (A) contains a pigment, wherein the pigment includes at least one of an inorganic pigment or an organic pigment, and a pearl pigment; and
the film for laminating a metal plate has an a* value of -5 to 20 and a b* value of 0 to 50.

**2.** The film for laminating a metal plate according to claim 1, which satisfies the following formula:

$$|Gs_{85} - Gs_{45}|/|Gs_{85} - Gs_{60}| \geq 1.6$$

(where $Gs_{85}$ is 85-degree specular gloss, $Gs_{45}$ is 45-degree specular gloss, and $Gs_{60}$ is 60-degree specular gloss).

**3.** The film for laminating a metal plate according to claim 1 or 2, wherein the pearl pigment has an average length of 5 μm to 80 μm.

**4.** The film for laminating a metal plate according to any one of claims 1 to 3, wherein the pearl pigment contains mica and an oxide covering the mica, wherein the oxide is at least one selected from the group consisting of anatase-type titanium oxide, rutile-type titanium oxide, iron oxide, silicon oxide, and cobalt iron oxide.

**5.** The film for laminating a metal plate according to any one of claims 1 to 4, wherein a content of the pearl pigment is 0.02% by mass to 10% by mass in 100% by mass of the polyester resin layer (A).

**6.** The film for laminating a metal plate according to any one of claims 1 to 5, wherein the pigment of the polyester resin layer (A) includes the inorganic pigment.

**7.** The film for laminating a metal plate according to any one of claims 1 to 6, wherein the pigment of the polyester resin layer (A) includes the organic pigment, wherein the organic pigment is at least one selected from the group consisting of an acetoacetanilide-based azo pigment and a quinacridone-based organic pigment.

**8.** The film for laminating a metal plate according to any one of claims 1 to 7, wherein

a weight loss rate of the inorganic pigment is less than 1.5% by mass when the inorganic pigment is heated from room temperature to 300°C at a rate of temperature increase of 10°C/min in a nitrogen atmosphere,
a weight loss rate of the organic pigment is less than 1.5% by mass when the organic pigment is heated from room temperature to 300°C at a rate of temperature increase of 10°C/min in a nitrogen atmosphere, and
a weight loss rate of the pearl pigment is less than 1.5% by mass when the pearl pigment is heated from room temperature to 300°C at a rate of temperature increase of 10°C/min in a nitrogen atmosphere.

**9.** The film for laminating a metal plate according to any one of claims 1 to 8, wherein a color difference ΔE* before and after retorting at 130°C for 120 minutes is less than 10.

**10.** The film for laminating a metal plate according to any one of claims 1 to 9, further comprising a polyester resin layer (B) that is in contact with the polyester resin layer (A), wherein
the polyester resin layer (B) substantially does not contain a pigment.

**11.** The film for laminating a metal plate according to claim 10, wherein

the polyester resin layer (A) has a thickness of 5 μm to 50 μm, and
the polyester resin layer (B) has a thickness of 0.5 μm to 15 μm.

**12.** The film for laminating a metal plate according to any one of claims 1 to 11, wherein

the metal plate is a metal plate that is molded into a member constituting a container for food and/or drink, and
the film for laminating a metal plate is used so as to be disposed on an inner surface of the container.

## INTERNATIONAL SEARCH REPORT

International application No.
**PCT/JP2022/024359**

**A. CLASSIFICATION OF SUBJECT MATTER**

***B32B 15/09***(2006.01)i; ***B32B 27/00***(2006.01)i; ***B32B 27/20***(2006.01)i; ***B32B 27/36***(2006.01)i; ***B65D 65/40***(2006.01)i; ***C08J 5/18***(2006.01)i; ***C08K 3/013***(2018.01)i; ***C08L 67/00***(2006.01)i
FI: B32B15/09 A; B32B27/00 E; B32B27/20 A; B32B27/36; B65D65/40 D; C08J5/18 CFD; C08K3/013; C08L67/00

According to International Patent Classification (IPC) or to both national classification and IPC

**B. FIELDS SEARCHED**

Minimum documentation searched (classification system followed by classification symbols)

B32B1/00-43/00; B65D1/00-90/66; C08J5/00-5/02; 5/12-5/22

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 60-123338 A (DAIWA SEIKAN KK) 02 July 1985 (1985-07-02)<br>claims 1, 6, pp. 2, 4-5, examples 2, 4 | 1-3, 5-6, 8-9, 12 |
| Y | claims 1, 6, pp. 2, 4-5, examples 2, 4 | 4-6, 8-9, 12 |
| A | | 7, 10-11 |
| Y | JP 3-76764 A (DAINIPPON TORYO CO LTD) 02 April 1991 (1991-04-02)<br>p. 2 | 4-6, 8-9, 12 |
| A | | 1-3, 7, 10-11 |
| X | JP 2000-154264 A (TOYO KOHAN CO LTD) 06 June 2000 (2000-06-06)<br>claim 2, paragraphs [0003], [0009], [0011], [0013], [0015], example 6 | 1-12 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **08 August 2022** | **23 August 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/024359**

| Patent document cited in search report | Publication date (day/month/year) | Patent family member(s) | Publication date (day/month/year) |
|---|---|---|---|
| JP 60-123338 A | 02 July 1985 | (Family: none) | |
| JP 3-76764 A | 02 April 1991 | (Family: none) | |
| JP 2000-154264 A | 06 June 2000 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2021031634 A
- JP 2007045895 A